(19) **Europäisches Patentamt / European Patent Office / Office européen des brevets**

(11) **EP 4 458 167 A1**

(12) # EUROPEAN PATENT APPLICATION
published in accordance with Art. 153(4) EPC

(43) Date of publication:
**06.11.2024 Bulletin 2024/45**

(21) Application number: **22915936.3**

(22) Date of filing: **23.12.2022**

(51) International Patent Classification (IPC):
**A23L 27/00** (2016.01)   **A23J 3/00** (2006.01)
**A23J 3/14** (2006.01)   **A23L 11/00** (2021.01)

(52) Cooperative Patent Classification (CPC):
**A23J 3/00; A23J 3/14; A23L 11/00; A23L 27/00**

(86) International application number:
**PCT/JP2022/047535**

(87) International publication number:
**WO 2023/127713 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021212882**

(71) Applicant: **Amano Enzyme Inc.**
**Nagoya-shi**
**Aichi 460-8630 (JP)**

(72) Inventors:
• **SAKAI Kiyota**
  **Kakamigahara-shi, Gifu 509-0109 (JP)**
• **YAMASHIRO Kan**
  **Kakamigahara-shi, Gifu 509-0109 (JP)**

(74) Representative: **Witthoff Jaekel Steinecke**
**Patentanwälte PartG mbB**
**Postfach 1140**
**52412 Jülich (DE)**

(54) **FLAVOR-ENHANCING AGENT FOR VEGETABLE RAW MATERIAL, AND APPLICATION OF SAME**

(57)   It is an object of the present invention to provide a food product, in which odor derived from plant-based raw material is suppressed. The present invention relates to a flavor improver or water retention improver for plant-based raw materials, which includes a cyclodextrin-producing enzyme, and a food product, which is obtained by allowing a cyclodextrin-producing enzyme to act on a plant-based raw material. In addition, the present invention relates to a method for producing a food product, including a step of allowing a cyclodextrin-producing enzyme to act on a plant-based raw material.

EP 4 458 167 A1

**Description**

Technical Field

The present invention relates to a flavor improver for plant-based raw materials, a water retention improver for plant-based raw materials, a food product, and a method for producing a food product.

Background Art

In recent years, the share of food products made using plant-based protein materials (hereinafter also referred to as "plant-based protein-containing food products") as substitutes for animal protein food products has been increasing in the food product market. For example, textured plant-based protein-containing food products are being developed as meat-like processed food products. The textured plant-based protein-containing food products have targeted at some consumers such as vegetarians and vegans in the past. However, in the last few years, the demand trend has changed, and the textured plant-based protein-containing food products are now attracting renewed attention due to increasing awareness of health consciousness, diet, environmental issues, animal welfare, and so on.
Despite continuous technological development, the appearance, flavor (taste and aroma), and texture of textured plant-based protein-containing food products are different from those of conventional meat products. In particular, when such textured plant-based protein-containing food products are processed into meat-like processed food products, it is problematic in that the odor derived from plant-based raw materials (unpleasant odor) remains, and in that such odor inhibits the meat flavor. Soybeans are often used as a raw material for textured plant-based protein, but the soybeans have a distinctive bean- and grass-like odor, and in the textured plant-based protein-containing food products derived from soybeans, these odors have a negative impact on the overall flavor. Therefore, in the case of such textured plant-based protein-containing food products, it has been desired to develop a technique of removing the odor from the plant-based raw materials.
For example, Non-Patent Document 1 discloses existing methods of reducing a soybean odor, and the methods include genetic, chemical, and physical methods of reducing a soybean odor. Moreover, Patent Document 1 discloses a method of improving the quality of processed soybean products, which includes adding cyclodextrin in the step of producing processed soybean products, followed by mixing them in the presence of water. Patent Document 2 discloses a meat-like protein food product produced by adding cyclodextrin to a soybean protein and processing the mixture. Patent Document 3 discloses a method for producing dough, including a step of introducing into the dough, cyclodextrin glucanotransferase in an amount that increases the volume of a baked product.

Prior Art Documents

Patent Documents

Patent Document 1: JP Patent Publication No. S51-148052 A (1976)
Patent Document 2: JP Patent Publication No. H6-98686 A (1994)
Patent Document 3: JP Patent Publication No. H8-51916 A (1996)

Non-Patent Documents

Non-Patent Document 1: Trends in Food Science & Technology 112, 336-347

Summary of Invention

Objects to be Solved by the Invention

As mentioned above, plant-based protein-containing food products have unpleasant odors derived from raw materials, which adversely affect the overall flavor. As a conventional method of reducing a soybean odor, a method of adding cyclodextrin, which has the ability to conjugate hydrophobic volatile components, has been studied. However, since cyclodextrin is a food product additive, it is required to be essentially listed on the ingredient label of food products, and the ingredient label of food products containing cyclodextrin must contradict with the recent trend toward clean labeling. In addition, the flavor and texture of plant-based protein-containing food products containing cyclodextrin are different from those of meat-like protein food products in some cases, and thus, further improvement has been required.

Hence, it is an object of the present invention to provide a novel method of improving the flavor of a plant-based protein-containing food product, and it is another object of the present invention to provide a flavor improver for plant-based raw materials.

Means for Solving the Objects

As a result of intensive studies conducted directed towards achieving the aforementioned objects, the present inventors have found that a food product with a suppressed odor derived from a plant-based raw material (unpleasant odor) can be obtained by allowing a cyclodextrin-producing enzyme to act on the plant-based raw material, thereby completing the present invention.

Specifically, the present invention has the following configurations.

[1] A flavor improver for plant-based raw materials, including a cyclodextrin-producing enzyme.

[2] The flavor improver according to [ 1 ], in which the cyclodextrin-producing enzyme is cyclodextrin glucanotransferase.

[3] The flavor improver according to [ 1 ] or [ 2 ], in which the plant-based raw material is a textured plant-based protein-containing raw material.

[4] The flavor improver according to any one of [ 1 ] to [ 3 ], in which the plant-based raw material includes polysaccharides.

[5] A water retention improver for plant-based raw materials, including a cyclodextrin-producing enzyme.

[6] The water retention improver according to [ 5 ], in which the cyclodextrin-producing enzyme is cyclodextrin glucanotransferase.

[7] The water retention improver according to [ 5 ] or [ 6 ], in which the plant-based raw material is a textured plant-based protein-containing raw material.

[8] The water retention improver according to any one of [ 5 ] to [ 7 ], in which the plant-based raw material includes polysaccharides.

[9] A food product, which is obtained by allowing the flavor improver according to any one of [ 1 ] to [ 4 ] or the water retention improver according to any one of [ 5 ] to [8] to act on a plant-based raw material.

[10] The food product according to [ 9 ], which is a meat-like processed food product.

[11] The food product according to [ 9 ] or [ 10 ], in which the content of the cyclodextrin-producing enzyme is 0.1 U or more per g of the food product.

[12] A method for producing a food product, including allowing a cyclodextrin-producing enzyme to act on a plant-based raw material.

[13] The method for producing a food product according to [ 12 ], in which the cyclodextrin-producing enzyme is cyclodextrin glucanotransferase.

[14] The method for producing a food product according to [ 12 ] or [ 13 ], in which the plant-based raw material is a textured plant-based protein-containing raw material.

[15] The method for producing a food product according to any one of [ 12 ] to [ 14 ], in which the plant-based raw material includes polysaccharides.

[16] The method for producing a food product according to any one of [ 12 ] to [ 15 ], in which the food product is a meat-like processed food product.

[17] The method for producing a food product according to any one of [ 12 ] to [ 16 ], in which the additive amount of the cyclodextrin-producing enzyme is 1 U or more per g of the plant-based raw material.

In addition, the present invention has the following configurations.

[A] A method of improving a flavor, including allowing a cyclodextrin-producing enzyme to act on a plant-based raw material.

[B] An enzyme agent including a cyclodextrin-producing enzyme, which is for use in improving the flavor of a plant-based raw material.

[C] Use of an enzyme agent including a cyclodextrin-producing enzyme, for improving the flavor of a plant-based raw material.

Advantageous Effects of Invention

According to the present invention, there can be obtained a food product, in which the odor derived from a plant-based raw material (unpleasant odor) is suppressed by allowing a cyclodextrin-producing enzyme to act on the plant-based raw material. Moreover, according to the present invention, an unconventional flavor improver for plant-based raw materials can be provided.

Embodiments of Carrying out the Invention

Hereafter, the present invention will be described in detail. The configuration requirements described below may be described based on representative embodiments or specific examples, but the present invention is not limited to such embodiments. In the present description, a numerical value range expressed using the preposition "to" means a range that includes the numerical values described before and after the preposition "to" as lower and upper limits.

(Flavor improver/Water retention improver)

The present invention relates to a flavor improver for plant-based raw materials, including a cyclodextrin-producing enzyme. The flavor improver is not particularly limited, as long as it is an agent including a cyclodextrin-producing enzyme. The flavor improver may also be an agent consisting of a cyclodextrin-producing enzyme. Moreover, the flavor improver may be in a powder, solid, gel, or liquid form. In the present invention, the flavor improver is allowed to act on a plant-based raw material, so that a food product with a suppressed odor derived from the plant-based raw material (unpleasant odor) can be obtained. Besides, in the present description, the odor derived from the plant-based raw material (unpleasant odor) is an odor specific to the plant-based raw material, and for example, in a case where the plant-based raw material is soybean, it is an odor like that of beans or grass (what is called, soybean odor), and this is an odor that is not emitted from animal proteins. In addition, in the present invention, by allowing the flavor improver to act on the plant-based raw material, a miscellaneous taste derived from the plant-based raw material can also be reduced. In the present description, the miscellaneous taste derived from the plant-based raw material means a miscellaneous taste specific to the plant-based raw material, and for example, when the plant-based raw material is soybean, it is a taste is reminiscent of beans or grass. By allowing the flavor improver of the present invention to the plant-based raw material, the odor (unpleasant odor) and the miscellaneous taste, which are derived from plant-based raw material can be reduced, and it becomes possible to obtain a food product having a flavor that more closely resembles the flavor of animal protein.

Moreover, the present invention relates to a water retention improver for plant-based raw materials, including a cyclodextrin-producing enzyme. The water retention improver is not particularly limited, as long as it is an agent including a cyclodextrin-producing enzyme. The water retention improver may also be an agent consisting of a cyclodextrin-producing enzyme. Moreover, the water retention improver may be in a powder, solid, gel, or liquid form. In the present invention, the water retention improver is allowed to act on a plant-based raw material, so that a food product retaining a water content (a food product with suppressed water separation) can be obtained. In the food product obtained by allowing the water retention improver to act on the plant-based raw material, the cooking loss during the production step is reduced, and the juiciness and texture of the animal protein are easily reproduced.

As described above, the enzyme agent including a cyclodextrin-producing enzyme can improve the flavor of a plant-based raw material and can also improve the water retention of the obtained food product. Accordingly, in the obtained food product, since the odor (unpleasant odor) and the miscellaneous taste, which are derived from the plant-based raw material are reduced and a water content is retained, a good flavor and a good texture are achieved. Thus, the food product obtained by the present invention becomes a food product, in which the odor and taste are improved and which has a good flavor and also has the texture of an animal protein such as juiciness (i.e. a meat-like processed food product).

< Cyclodextrin-producing enzyme >

The cyclodextrin-producing enzyme is an enzyme having an activity of producing cyclodextrin with a degree of polymerization of 6 to 8, using a polymer consisting of $\alpha$-1,4-bonded glucose as a substrate. The cyclodextrin-producing enzyme is not particularly limited in terms of the type and origin, etc., as long as it has the above-described activity. Moreover, the cyclodextrin-producing enzyme may also have other activities, as long as it has the above-described activity.

A preferred example of the cyclodextrin-producing enzyme may be cyclodextrin glucanotransferase. More specific examples of the cyclodextrin-producing enzyme may include cyclodextrin-producing enzymes derived from: Bacillus sp., such as, for example, *Bacillus stearothermophilus, Bacillus megaterium, Bacillus circulans, Bacillus macerans, Bacillus ohbensis,* and *Bacillus clarkii;* Paenibacillus sp., such as, for example, *Paenibacillus macerans*; Geobacillus sp., such as, for example, *Geobacillus stearothermophilus*; klebsiella sp., such as, for example, *Klebsiella pneumoniae;* Thremoanaerobactor sp.; and Brevibacterium sp. These cyclodextrin-producing enzymes may be used alone as a single type, or may also be used in combination of multiple types. Among others, from the viewpoint of the improvement of the flavor of a plant-based raw material, more preferred examples of the cyclodextrin-producing enzyme may include cyclodextrin glucanotransferases derived from Geobacillus and cyclodextrin glucanotransferase derived from Paenibacillus; and further preferred examples of the cyclodextrin-producing enzyme may include cyclodextrin glucanotransferases derived from *Geobacillus stearothermophilus* and *Paenibacillus macerans.*

Cyclodextrin-producing enzyme can be prepared from a culture solution of microorganisms serving as an origin of the above-described cyclodextrin-producing enzyme. A specific preparation method may be a method of recovering a cyclodextrin-producing enzyme from the culture solution or cell mass of the above-described microorganisms. For example, in the case of using cyclodextrin-producing enzyme-secreting microorganisms, the cell mass has previously been recovered from the culture solution by filtration, centrifugation, etc., as necessary, and the enzyme is then separated and/or purified. In the case of using cyclodextrin-producing enzyme-non-secreting microorganisms, the cell mass has previously been recovered from the culture solution, as necessary, and the recovered cell mass is then crushed by a pressure treatment, an ultrasonic treatment, etc. to expose the enzyme, and the enzyme can be then separated and/or purified. The method of separating and/or purifying the enzyme is not particularly limited, and a known protein separation and/or purification method can be used. Examples of such a protein separation and/or purification method may include a centrifugal separation method, a UF concentration method, a salting-out method, and various types of chromatographic methods using ion exchange resin, etc. The separated and/or purified enzyme can be powderized by drying methods such as freeze-drying and drying under reduced pressure. Otherwise, the separated and/or purified enzyme can also be powderized by using suitable excipients and/or drying aids in such drying methods. Moreover, the separated and/or purified enzyme can also be liquefied by adding suitable additives thereto and performing filter sterilization.

A commercially available product can also be used as such a cyclodextrin-producing enzyme. Examples of a preferred commercially available product may include Contizyme (cyclodextrin glucanotransferase derived from *Paenibacillus macerans*) and cyclodextrin glucanotransferase derived from *Geobacillus stearothermophilus,* which are manufactured by Amano Enzyme Inc.

When the flavor improver is allowed to act on a plant-based raw material, the amount of the cyclodextrin-producing enzyme allowed to act thereon is not particularly limited. For example, the cyclodextrin-producing enzyme is preferably added, so that the enzyme activity becomes 1 U or more with respect to 1 g of polysaccharides in the plant-based raw material. From the viewpoint of further enhancing the flavor-improving effects, the enzyme activity is more preferably 5 U or more, further preferably 10 U or more, still further preferably 50 U or more, and particularly preferably 90 U or more, with respect to 1 g of polysaccharides in the plant-based raw material. On the other hand, the upper limit value of the enzyme activity is not particularly limited, and for example, the upper limit value is preferably 10000 U or less, more preferably 1000 U or less, even more preferably 500 U or less, further preferably 250 U or less, even further preferably 200 U or less, still further preferably 150 U or less, and particularly preferably 110 U or less, with respect to 1 g of polysaccharides in the plant-based raw material. It is to be noted that the additive amount of the flavor improver is preferably adjusted, as appropriate, according to the type of the cyclodextrin-producing enzyme.

The activity of the cyclodextrin-producing enzyme is measured by the following method. First, 20 mL of water is added to 1.0 g of potato starch, and 5 mL of a sodium hydroxide solution (1 mol/L) is gradually added, while stirring, to form a paste. After heating the paste in a boiling water bath for 3 minutes while stirring, 25 mL of water is added to the resultant, and the reaction mixture is then cooled in running water. Thereafter, the reaction mixture is adjusted to pH 5.5 with an acetic acid reagent solution (1 mol/L), and water is further added to the reaction mixture to prepare 100 mL of a solution, which is defined as a substrate solution. Thereafter, 10 mL of the substrate solution is weighed, and is heat at 40°C for 10 minutes. After that, 1 mL of a cyclodextrin-producing enzyme solution is added to and mixed with the substrate solution. The mixed solution is incubation at 40°C for 10 minutes, and a 10 mL of a hydrochloric acid reagent solution (0.1 mol/L) is added to the reaction mixture to terminate the reaction. To 1 mL of this reaction solution, 10 mL of an iodine/potassium iodide reagent solution (0.4 mmol/L) is added and mixed, so as to prepare a test solution. It is to be noted that the iodine/potassium iodide reagent solution is prepared by dissolving 10.0 g of potassium iodide and 1.0 g of iodine in water to obtain 100 mL of a solution, and diluting the obtained solution 200 times with water. Water is used instead of the reaction solution to prepare a comparative solution, and the test solution and the comparative solution are measured in terms of the absorbance at 660 nm. The amount of the enzyme that reduces the blue iodine coloration of the starch by 1% per minute is defined as one unit (U).

< Plant-based raw material >

The plant-based raw material used herein is not particularly limited in terms of the origin, properties, etc. Examples of the plant-based raw material may include: beans, such as soybeans, peas, lentils, chickpeas, black beans, fava beans, mung beans, lupine beans, and kidney beans; grains, such as wheat, barley, oats, rice, rye, buckwheat, chives, millet, and teff; nuts, such as almonds, coconuts, peanuts, cashews, hazelnuts, pecan nuts, macadamia nuts, pistachios, walnuts, brazil nuts, pili nuts, chestnuts, sesame seeds, and pine nuts; and seeds, such as hemp seeds (industrial hemp), chia seeds, chia, amaranth, canary seeds, and linseeds. These plant-based raw materials may be used alone, or may also be used in combination of two or more types. Among others, the plant-based raw materials are preferably beans or grains, more preferably beans, and further preferably soybeans.

The plant-based raw material is preferably a raw material containing a protein, a chemically partially degraded proteins by acid, alkali. etc., an enzymatically partially degraded protein by protease, etc., a chemically modified protein by various types of reagents, a synthetic peptide, or the like. The plant-based raw material is preferably a raw material also containing polysaccharides (for example, starch, dextrin, etc.), and is more preferably a raw material containing starch. The polysaccharides may be polysaccharides originally contained in the above-described plant-based raw material. Alternatively, polysaccharides of different origins may be combined with one another to make a plant-based raw material.

When the cyclodextrin-producing enzyme is allowed to act on a plant-based raw material, the content of the protein in the plant-based raw material is not particularly limited. The content of the protein in the plant-based raw material is preferably 0.1% by mass or more, more preferably 0.5% by mass or more, even more preferably 1% by mass or more, further preferably 5% by mass or more, still further preferably 10% by mass or more, and particularly preferably 15% by mass or more. On the other hand, the content of the protein in the plant-based raw material is preferably 90% by mass or less, more preferably 70% by mass or less, further preferably 50% by mass or less, still further preferably 30% by mass or less, and particularly preferably 25% by mass or less.

When the cyclodextrin-producing enzyme is allowed to act on a plant-based raw material, the content of the polysaccharides in the plant-based raw material is not particularly limited. The content of the polysaccharides in the plant-based raw material is preferably 0.1% by mass or more, more preferably, 0.5% by mass or more, further preferably 1% by mass or more, and particularly preferably 3% by mass or more. On the other hand, the content of the polysaccharides in the plant-based raw material is preferably 40% by mass or less, more preferably 30% by mass or less, even more preferably 20% by mass or less, further preferably, 15% by mass or less, still further preferably 10% by mass or less, and particularly preferably 7% by mass or less.

The properties of the plant-based raw material subjected to the treatment with the flavor improver are not particularly limited. The plant-based raw material may be, for example, a textured form, a liquid, a slurry, or a paste. Among others, regarding the properties of the plant-based raw material, the plant-based raw material is preferably a textured plant-based raw material. The plant-based raw material is more preferably a textured plant-based protein-containing raw material, and particularly preferably a textured soybean protein-containing raw material. It is to be noted that, in the present description, the textured plant-based protein-containing raw material is a food product material that is generally known as an alternative meat (fake meat). A typical example of the textured plant-based protein-containing raw material may be a material produced by extruding a raw material mixture including a plant-based protein such as soybeans and water, using an extruder, etc., and subjecting the extruded product to drying, freezing or moisturizing, to obtain a meat-like textured material (tissue formation).

(Food product)

The present invention also relates to a food product obtained by allowing the aforementioned flavor improver or water retention improver to act on a plant-based raw material. The food product of the present invention is preferably a plant-based protein-containing food product, more preferably a textured plant-based protein-containing food product, and particularly preferably a textured soybean protein-containing food product. In addition, the food product of the present invention is preferably a plant-based alternative food product, and more preferably a food product, in which at least the flavor is improved by the after-mentioned production method. Specific examples of the plant-based alternative food product may include alternative meat, alternative milk, alternative yogurt, and alternative cheese. Among others, the plant-based alternative food product is preferably an alternative meat (meat-like processed food product), and particularly preferably a soy meat.

The food product of the present invention is a food product with a suppressed odor derived from the plant-based raw material (unpleasant odor). For example, in a case where the plant-based raw material is soybean, the detection amount of multiple types of compounds causing an odor like that of beans or grass (what is called, soybean odor) in the food product, such as hexanal , heptanal, nonanal, benzaldehyde, octanal, 1-hexanol, 1-octen-3-ol, 2-pentylfuran, and furfural, is decreased. Moreover, since the detection amount of these compounds is decreased, a miscellaneous taste specific to the plant-based raw material in the food product is also reduced. Thus, since the odor (unpleasant odor) and the miscellaneous taste, which are derived from the plant-based raw material are reduced in the food product of the present invention, the present food product can exhibit the flavor of animal protein more strongly.

The content of the cyclodextrin-producing enzyme in the food product of the present invention is preferably 0.1 U or more, more preferably 0.5 U or more, further preferably 1 U or more, and particularly preferably 2 U or more, per g of the food product. On the other hand, the content of the cyclodextrin-producing enzyme and a product derived therefrom is preferably 100 U or less, more preferably, 50 U or less, and further preferably, 10 U or less, per g of the food product. By adjusting the content of the cyclodextrin-producing enzyme and a product derived therefrom in the food product within the above-described range, the odor (unpleasant odor) and the miscellaneous taste which are derived from the plant-based raw material can be more effectively reduced.

(Method for producing a food product)

The present invention relates to a method for producing a food product, including allowing a cyclodextrin-producing enzyme to act on a plant-based raw material. By allowing a cyclodextrin-producing enzyme to act on a plant-based raw material, a food product, in which the odor derived from the plant-based raw material (unpleasant odor) is suppressed and the miscellaneous taste derived from the plant-based raw material is reduced, can be produced. By allowing a flavor improver to act on a plant-based raw material, it becomes possible to obtain a food product, in which the odor (unpleasant odor) and the miscellaneous taste, which are derived from the plant-based raw material are reduced, and as a result, the flavor closely resembles the flavor of animal protein.

The cyclodextrin-producing enzyme and the plant-based raw material, as mentioned above, are exemplified as a cyclodextrin-producing enzyme and a plant-based raw material used in the production of the food product. Besides, when the plant-based raw material does not originally include polysaccharides, a step of obtaining a plant-based raw material including polysaccharides may be established before the step of allowing a cyclodextrin-producing enzyme to act on a plant-based raw material.

In the step of allowing a cyclodextrin-producing enzyme to act on a plant-based raw material, the reaction time, temperature, pH of the reaction solution, and the like are not particularly limited. The reaction temperature is, for example, 50°C to 90°C, and preferably 50°C to 70°C. The pH of the reaction solution is, for example pH 5 to 8, and preferably pH 5 to 7. The reaction time is, for example, 1 minute to 24 hours, preferably 30 minutes to 10 hours, and more preferably 1 to 4 hours. By adopting the aforementioned reaction conditions, the flavor of the plant-based raw material can be more effectively improved. However, these reaction conditions are selected, as appropriate, depending on the type of a food product of interest. Besides, the optimal reaction conditions may be determined through preliminary experiments.

The additive amount of a cyclodextrin-producing enzyme in the step of allowing the cyclodextrin-producing enzyme to act on a plant-based raw material is preferably 1 U or more, more preferably 3 U or more, further preferably 6 U or more, still further preferably 10 U or more, and particularly preferably 15 U or more, per g of the plant-based raw material (dried plant-based raw material). On the other hand, the additive amount of the cyclodextrin-producing enzyme is preferably 1000 U or less, more preferably 500 U or less, and further preferably 100 U or less, per g of the plant-based raw material (dried plant-based raw material). By adjusting the additive amount of the cyclodextrin-producing enzyme within the above-described range, the odor (unpleasant odor) and the miscellaneous taste, which are derived from the plant-based raw material can be more effectively reduced.

The method for producing a food product of the present invention may include a step of inactivating a cyclodextrin-producing enzyme, after the step of allowing the cyclodextrin-producing enzyme to act on a plant-based raw material. In the step of inactivating the cyclodextrin-producing enzyme, for example, the plant-based raw material treated with the cyclodextrin-producing enzyme can be heated to 80°C or higher, or the enzyme solution can be separated from the plant-based raw material by centrifugation. Thus, the method for producing a food product of the present invention may include a step of inactivating a cyclodextrin-producing enzyme and a step of recovering the inactivated cyclodextrin-producing enzyme, after the step of allowing the cyclodextrin-producing enzyme to act on a plant-based raw material.

Moreover, after the step of allowing a cyclodextrin-producing enzyme to act on a plant-based raw material, the method for producing a food product of the present invention may include a step of recovering a plant-based protein-containing food product, in which the detection amount of at least one type selected from the group consisting of hexanal, heptanal, nonanal, benzaldehyde, octanal, 1-hexanol, 1-octen-3-ol, 2-pentylfuran and furfural is reduced by 10% or more (preferably 20% or more, and more preferably 30% or more), compared with the case of not treating the plant-based raw material with the enzyme. Furthermore, after the step of allowing a cyclodextrin-producing enzyme to act on a plant-based raw material, the method for producing a food product of the present invention may include a step of recovering a plant-based protein-containing food product, in which the liquid loss percentage is reduced by 0.3% or more (preferably 1% or more, and more preferably 2% or more), compared with the case of not treating the plant-based raw material with the enzyme.

Examples

Hereinafter, the characteristics of the present invention will be more specifically described in the following examples. The materials, amounts used, proportions, treatment contents, treatment procedures, etc. shown in the following examples may be changed, as appropriate, without deviating from the gist of the present invention. Therefore, the scope of this invention should not be interpreted limitedly by the specific examples shown below.

< Measurement methods >

< Enzymes used >

The following enzymes were used in the Examples below.

CGT1: Cyclodextrin glucanotransferase derived from *Paenibacillus macerans* (Contizyme, manufactured by Amano Enzyme Inc.)
CGT2: Cyclodextrin glucanotransferase derived from *Geobacillus stearothermophilus* (manufactured by Amano Enzyme Inc.)

< Method of measuring enzyme activity >

Water (20 mL) was added to 1.0 g of potato starch, and 5 mL of a sodium hydroxide solution (1 mol/L) was gradually added, while stirring, to form a paste. After heating the paste in a boiling water bath for 3 minutes while stirring, 25 mL of water was added to the resultant, and the reaction mixture was then cooled in running water. Thereafter, the reaction mixture was adjusted to pH 5.5 with an acetic acid reagent solution (1 mol/L), and water was further added to the reaction mixture to prepare 100 mL of a solution, which was defined as a substrate solution. Thereafter, 10 mL of the substrate solution was weighed, and was heat at 40°C for 10 minutes. After that, 1 mL of an enzyme solution was added to and mixed with the substrate solution. The mixed solution was incubation at 40°C for 10 minutes, and a 10 mL of a hydrochloric acid reagent solution (0.1 mol/L) was added to the reaction mixture to terminate the reaction. To 1 mL of this reaction solution, 10 mL of an iodine/potassium iodide reagent solution (0.4 mmol/L) was added and mixed, so as to prepare a test solution. It is to be noted that the iodine/potassium iodide reagent solution was prepared by dissolving 10.0 g of potassium iodide and 1.0 g of iodine in water to obtain 100 mL of a solution, and diluting the obtained solution 200 times with water. Water was used instead of the reaction solution to prepare a comparative solution, and the test solution and the comparative solution were measured in terms of the absorbance at 660 nm. The amount of the enzyme that reduces the blue iodine coloration of the starch by 1% per minute was defined as one unit (U).

$$\text{Enzyme activity (U/g)} = (A0 - A10) / A0 \times 100/10 \times n$$

A10: Absorbance of reaction solution
A0: Absorbance of blank solution
100: Conversion factor of %
10: Reaction time (minute)
n: Dilution factor per g or mL of sample

< GC/MS analysis >

Alternative meat was cut into 3 g of a piece, which was then placed in a 20-mL vial. The substance volatilized from each alternative meat was analyzed by Headspace GC/MS (GC-2030 manufactured by Shimadzu Corporation), using 1,2-dichlorobenzene as an internal specimen. At that time, polydimethylsiloxane (PDMS) was selected as an SPME fiber. The vial was heated at 80°C for 30 minutes, the headspace was filled with volatile components, and each volatile component was adsorbed onto an InterCap Pure-WAX Column (manufactured by GL Sciences Inc.) at 100 kPa for 60 minutes at a flow rate of 2 mL/min. Thereafter, the column was heat-treated to 230°C, and each volatile component was analyzed and identified by MS analysis. Each volatile component (volatile compound) was identified by comparing its mass spectrum with that of the specimen.

< Test Example 1 >

(1) Experimental method

To 10 g of a textured plant-based protein-containing raw material (DAIZU LABO *"Daizu no Oniku* (soybean meat)"), Dried Minced, manufactured by Marukome Co., Ltd.), 6 times its weight of water was added, and thereafter, the raw material was left at rest at 60°C for 60 minutes for swelling, and was then rinsed with water. After draining off the water, 25 g of a swollen textured plant-based protein-containing raw material was obtained. With respect to 25 g of the swollen textured plant-based protein-containing raw material, 2 g of starch, 5 mL of water, 5 mL of olive oil, methyl cellulose (final concentration: 2% by mass), and 200 U of CGT1 were mixed, and the obtained mixture was then molded into the shape of a patty, so as to obtain a textured plant-based protein-containing food product (after seasoning, before baking) as a plant-based alternative meat. The textured plant-based protein-containing food product (after seasoning, before baking) was incubated at 60°C for 2 hours, and was then baked at 150°C for 20 minutes. Thus, a textured plant-based protein-containing food product (after baking) was obtained in the form of a patty. For comparison, a patty (a textured plant-based protein-containing food product (untreated with the enzyme)) was obtained by being molded without addition of CGT1. The obtained food products were subjected to GC/MS analysis. The ratio of the food product treated with the enzyme to the food product untreated with the enzyme (enzyme-treated/enzyme-untreated) was calculated for the detection amount of each volatile compound.

(2) Results

As shown in Table 1, hexanal, heptanal, nonanal, benzaldehyde, octanal, 1-hexanol, 1-octen-3-ol, 2-pentylfuran and furfural, which are representative compounds causing the development of a soybean odor, were detected by HS-GC/MS. As a result, the detection amount of compounds causing the development of a soybean odor from the food products (plant-based alternative meat), to which cyclodextrin glucanotransferase had been added, was decreased.

[Table 1]

| Volatile compound | | Detection amount ratio (Enzyme-treated/enzyme-untreated) |
|---|---|---|
| Aldehyde | Hexanal | 0.47 |
| | Heptanal | 0.50 |
| | Nonanal | 0.53 |
| | Benzaldehyde | 0.39 |
| | Octanal | 0.58 |
| Alcohol | 1-Hexanol | 0.61 |
| | 1-Octen-3-ol | 0.54 |
| Furan | 2-Pentylfuran | 0.48 |
| | Furfural | 0.63 |

(3) Consideration

It was revealed that the odor derived from the plant-based raw material in the plant-based alternative meat can be reduced by the treatment with cyclodextrin glucanotransferase.

< Test Example 2 >

(1) Experimental method

Textured plant-based protein-containing food products (patties) were obtained by the same method as that of Example 1, with the exception that the amount of water added to the swollen textured plant-based protein material was changed to the amounts shown in Table 2. The weight of each food product was measured before and after baking, and the liquid loss percentage was derived based on the following equation:

Liquid loss percentage (%) = (weight (g) of food product before baking - weight (g) of food product after baking)/(weight (g) of food prduct before baking) $\times$ 100.

(2) Results

As shown in Table 2, as the amount of water contained in the alternative meat was increased, the amount of liquid released was also increased for both the enzyme-untreated and enzyme-treated alternative meats. However, the liquid loss percentage was decreased in the enzyme-treated food product (plant-based alternative meat), compared with the enzyme-untreated alternative meat, and the enzyme-treated food product (plant-based alternative meat) had high water retention.

[Table 2]

| | Amount of water added | Liquid loss percentage (%) |
|---|---|---|
| Enzyme-treated | 10 | 6.4 |
| | 15 | 10.6 |
| | 20 | 13.9 |
| | 25 | 17.0 |
| | 30 | 20.4 |
| Enzyme-untreated | 10 | 6.8 |
| | 15 | 12.6 |
| | 20 | 16.3 |
| | 25 | 21.1 |
| | 30 | 24.0 |

(3) Consideration

Water retention was improved by the treatment with cyclodextrin glucanotransferase, and plant-based alternative meat having less cooking loss and maintaining juiciness could be produced.

< Test Example 3 >

(1) Experimental method

To 10 g of a textured plant-based protein material (dried material), 6 times the weight of water was added, and the material was then left at rest at 60°C for 60 minutes for swelling, and was then rinsed with water. After draining off the water, with respect to 25 g of the swollen textured plant-based protein material, 30 mL of water, 5 mL of olive oil, methyl cellulose (final concentration: 2% by mass), and the raw material shown in Table 3 were mixed, and the obtained mixture was then molded into the shape of a patty, so as to obtain a textured plant-based protein-containing food product (after seasoning, before baking). The textured plant-based protein-containing food product (after seasoning, before baking) was incubated at 60°C for 2 hours, and was then baked at 150°C for 20 minutes. Thus, a textured plant-based protein-containing food product (after baking) was obtained in the form of a patty. The weight of each food product was measured before and after baking, and the liquid loss percentage was derived based on the following equation:

Liquid loss percentage (%) = (weight (g) of food product before baking - weight (g) of food product after baking)/(weight (g) of food prduct before baking) $\times$ 100.

(2) Results

As shown in Table 3, as the amount of water in the alternative meat was increased, the amount of liquid released was also increased for both the enzyme-untreated and enzyme-treated alternative meats. However, the liquid loss percentage was decreased in the enzyme-treated food product (plant-based alternative meat), compared with the enzyme-untreated alternative meat, and the enzyme-treated food product (plant-based alternative meat) had high water retention. Besides, the water retention was not improved in any of the food products in which cyclodextrin was added instead of CGT (cyclodextrin glucanotransferase).

[Table 3]

| Starch | CGT1 | Cyclodextrin (CD) | Liquid loss percentage (%) |
|---|---|---|---|
| - | - | - | 24.0 |

(continued)

| Starch | CGT1 | Cyclodextrin (CD) | Liquid loss percentage (%) |
|--------|------|-------------------|----------------------------|
| 2g | 200 U | - | 20.4 |
| 2g | - | - | 24.1 |
| - | - | $\alpha$CD (final concentration: 2% by mass) | 24.6 |
| - | - | $\beta$CD (final concentration: 2% by mass) | 23.9 |
| - | - | $\gamma$CD (final concentration: 2% by mass) | 24.7 |

(3) Consideration

Water retention was not improved in addition of starch alone or addition of cyclodextrin alone. In contrast, it was revealed that the water retention was improved by combining addition of starch with the treatment with cyclodextrin glucanotransferase.

< Test Example 4 >

(1) Experimental method

To 10 mL of commercially available oat milk (protein content: 0.6% by mass; and sugars content: 4.4% by mass), 23 U of CGT2 (derived from *Geobacillus stearothermophilus*) was added, and the obtained mixture was then treated at 50°C for 3 hours. After boiling the reaction mixture for 5 minutes, it was cooled to room temperature. A sensory test was carried out with 6 panelists, and the bitterness level was evaluated.

(2) Results

Six out of six panelists judged that the bitterness was reduced as a result of the enzyme treatment.

(3) Consideration

It was revealed that the bitterness of oat milk can be reduced by the CGT treatment.

**Claims**

1. A flavor improver for plant-based raw materials, including a cyclodextrin-producing enzyme.

2. The flavor improver according to claim 1, in which the cyclodextrin-producing enzyme is cyclodextrin glucanotransferase.

3. The flavor improver according to claim 1 or 2, in which the plant-based raw material is a textured plant-based protein-containing raw material.

4. The flavor improver according to any one of claims 1 to 3, in which the plant-based raw material includes polysaccharides.

5. A water retention improver for plant-based raw materials, including a cyclodextrin-producing enzyme.

6. The water retention improver according to claim 5, in which the cyclodextrin-producing enzyme is cyclodextrin glucanotransferase.

7. The water retention improver according to claim 5 or 6, in which the plant-based raw material is a textured plant-based protein-containing raw material.

8. The water retention improver according to any one of claims 5 to 7, in which the plant-based raw material includes polysaccharides.

9. A food product, which is obtained by allowing the flavor improver according to any one of claims 1 to 4 or the water retention improver according to any one of claims 5 to 8 to act on a plant-based raw material.

10. The food product according to claim 9, which is a meat-like processed food product.

11. The food product according to claim 9 or 10, in which the content of the cyclodextrin-producing enzyme is 0.1 U or more per g of the food product.

12. A method for producing a food product, including allowing a cyclodextrin-producing enzyme to act on a plant-based raw material.

13. The method for producing a food product according to claim 12, in which the cyclodextrin-producing enzyme is cyclodextrin glucanotransferase.

14. The method for producing a food product according to claim 12 or 13, in which the plant-based raw material is a textured plant-based protein-containing raw material.

15. The method for producing a food product according to any one of claims 12 to 14, in which the plant-based raw material includes polysaccharides.

16. The method for producing a food product according to any one of claims 12 to 15, in which the food product is a meat-like processed food product.

17. The method for producing a food product according to any one of claims 12 to 16, in which the additive amount of the cyclodextrin-producing enzyme is 1 U or more per g of the plant-based raw material.

## INTERNATIONAL SEARCH REPORT

| International application No. |
|---|
| **PCT/JP2022/047535** |

**A.    CLASSIFICATION OF SUBJECT MATTER**

*A23L 27/00*(2016.01)i; *A23J 3/00*(2006.01)i; *A23J 3/14*(2006.01)i; *A23L 11/00*(2021.01)i
FI:   A23L27/00 Z; A23J3/00 502; A23J3/14; A23L11/00 Z

According to International Patent Classification (IPC) or to both national classification and IPC

**B.    FIELDS SEARCHED**

Minimum documentation searched (classification system followed by classification symbols)

A23L27/00; A23J3/00; A23J3/14; A23L11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | JP 8-051916 A (GIST BROCADES BV) 27 February 1996 (1996-02-27) | 1-2, 4, 9, 12-13, 15 |
| | paragraphs [0004]-[0006] | |
| Y | paragraphs [0004]-[0006] | 1-17 |
| X | JP 11-318373 A (KAO CORP) 24 November 1999 (1999-11-24) | 1-2, 4, 9, 12-13, 15 |
| | paragraphs [0006]-[0007] | |
| Y | paragraphs [0006]-[0007] | 1-17 |
| Y | 小林昭一, サイクロデキストリン研究開発の方向, 日本醸造協會雜誌, 1985, vol. 80, no. 7, pp. 434-440 | 1-17 |
| | pp. 435, 439-440, (KOBAYASHI, Shoichi. Directions of research and development on cyclodextrin. JOURNAL OF THE SOCIETY OF BREWING,JAPAN.) | |
| Y | JP 2021-171030 A (ORIENTAL YEAST CO LTD) 01 November 2021 (2021-11-01) | 3, 7, 10, 14, 16 |
| | paragraphs [0004]-[0006], [0036] | |
| A | JP 6-098686 A (NISSHIN OIL MILLS LTD) 12 April 1994 (1994-04-12) | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/047535**

| Patent document cited in search report | | | Publication date (day/month/year) | Patent family member(s) | | | Publication date (day/month/year) |
|---|---|---|---|---|---|---|---|
| JP | 8-051916 | A | 27 February 1996 | US columns 1-2 | 5916607 | A | |
| | | | | EP | 687414 | A1 | |
| | | | | ZA | 9504987 | A | |
| | | | | AU | 2174495 | A | |
| | | | | CA | 2151978 | A | |
| | | | | AT | 197371 | T | |
| | | | | ZA | 954987 | B | |
| | | | | CA | 2151978 | A1 | |
| JP | 11-318373 | A | 24 November 1999 | (Family: none) | | | |
| JP | 2021-171030 | A | 01 November 2021 | (Family: none) | | | |
| JP | 6-098686 | A | 12 April 1994 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S51148052 A
- JP H698686 A
- JP H851916 A

**Non-patent literature cited in the description**

- *Trends in Food Science & Technology,* vol. 112, 336-347